(19) **Europäisches Patentamt / European Patent Office / Office européen des brevets**

(11)　**EP 2 608 460 B1**

(12)　**EUROPEAN PATENT SPECIFICATION**

(45) Date of publication and mention
of the grant of the patent:
**21.09.2016　Bulletin 2016/38**

(21) Application number: **11817754.2**

(22) Date of filing: **08.08.2011**

(51) Int Cl.:
***H04L 12/815*** *(2013.01)*

(86) International application number:
**PCT/CN2011/078130**

(87) International publication number:
**WO 2012/022227 (23.02.2012 Gazette 2012/08)**

(54) **METHOD AND DEVICE FOR SENDING MESSAGES**

VERFAHREN UND VORRICHTUNG ZUM SENDEN VON NACHRICHTEN

PROCÉDÉ ET DISPOSITIF D'ENVOI DE MESSAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.08.2010　CN 201010256259**

(43) Date of publication of application:
**26.06.2013　Bulletin 2013/26**

(73) Proprietor: **ZTE Corporation
Shenzhen, Guangdong 518057 (CN)**

(72) Inventors:
• **GUO, Hongyan
  Guangdong 518057 (CN)**
• **JIN, Haiyan
  Guangdong 518057 (CN)**

• **SU, Zhonghua
  Guangdong 518057 (CN)**
• **WANG, Yi
  Guangdong 518057 (CN)**

(74) Representative: **Zinkler, Franz et al
Schoppe, Zimmermann, Stöckeler
Zinkler, Schenk & Partner mbB
Patentanwälte
Radlkoferstrasse 2
81373 München (DE)**

(56) References cited:
**EP-A2- 1 833 207　　WO-A1-2007/124660
CN-A- 1 588 950　　　CN-A- 101 753 412
CN-A- 101 917 646　　US-A1- 2006 013 247
US-A1- 2006 268 719**

**Description**

<u>Field of the Invention</u>

The disclosure relates to the field of Passive Optical Network (PON), and in particular to a method and an apparatus for sending a packet.

<u>Background of the Invention</u>

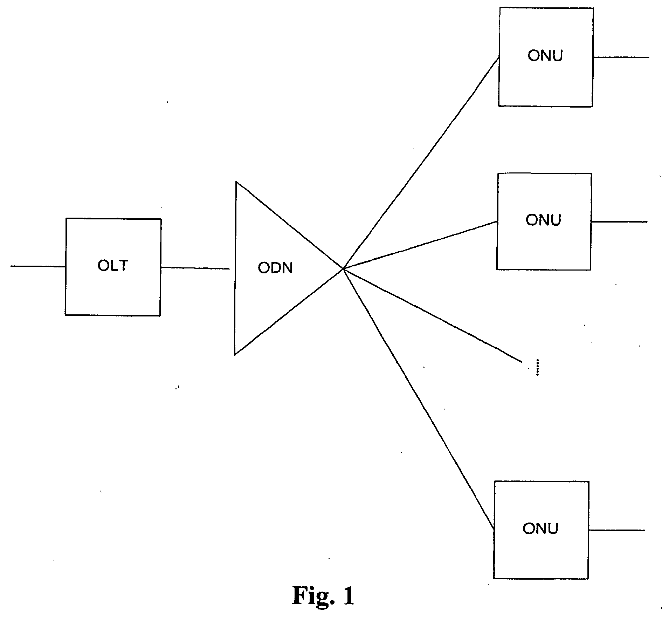

The PON technology is an optical access technology for Point to Multi Point (P2MP) transmission. Fig. 1 is a diagram of the structure of the PON system, which structure comprises an Optical Line Terminal (OLT) at a local side and multiple Optical Network Units (ONUs) at a remote end. The OLT is connected with the ONUs through an Optical Distribution Network (ODN) in a P2MP topological structure. If the ONU also provides a user port function, such as an Ethernet user port or a Plain Old Telephone Service (POTS) user port, it is called an Optical Network Terminal (ONT). The ONU and ONT are uniformly referred to as ONU hereinafter unless noted otherwise.

Compared with the active optical access technology, the PON removes the active device between a local side and a user side so as to achieve the effect of simple maintenance, high reliability and low cost. As the Chinese market gradually matures, the PON terminal has been applied to Internet bars as a network access device in several provinces in South China.

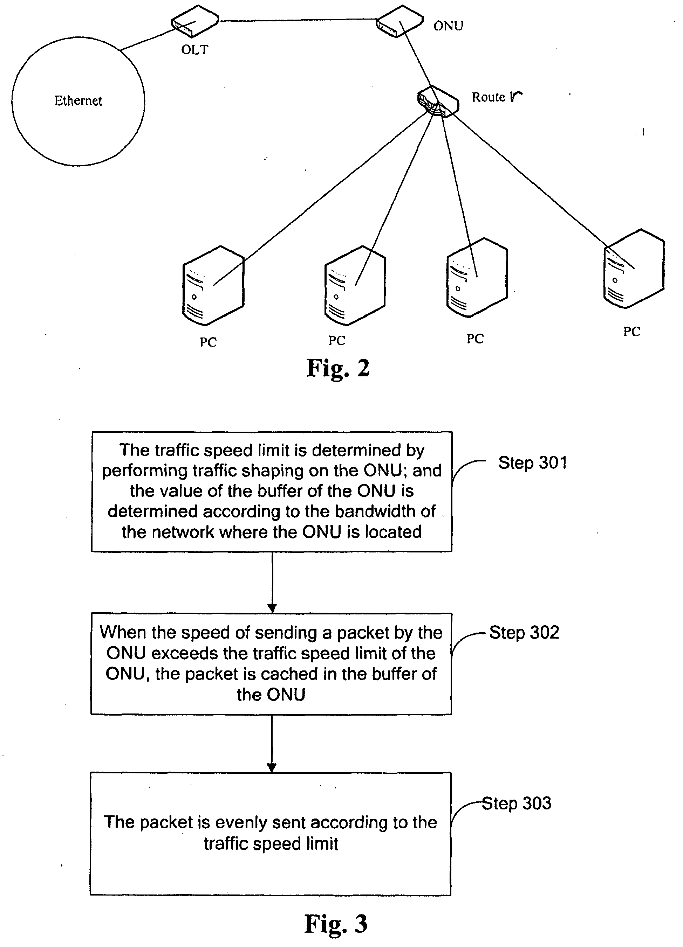

The specific environment for networking by taking the PON terminal as the network access device is as shown in Fig. 2. It can be seen that one end of the PON terminal is connected with an Ethernet, while the other end is connected with a router and a Personnel Computer (PC). As shown in Fig. 2, each ONU port is connected with many PCs through a router. For example, in an internet bar, each ONU port may be connected with dozens or even hundreds of PCs. Such circumstance may also occur in factories or internet enterprises. The description below takes the internet bar as an example.

The internet bar is a place where the wideband service is widely applied. Services applied here include browsing the web pages, QQ chat software (a common internet chatting software in China) or MSN chat software etc. for live chat, video chat, video movie, online game, downloading, uploading etc. Sometimes, even multicast is involved. Meanwhile, as a commercial place opening 24 hours a day, the service features of the internet bar comprise:

- long online time;
- various types of services and random occurrence of the services;
- high traffic demand and much burst traffic;
- limited egress bandwidth;
- high real-time requirement of users; and
- no service management.

The main problem of the PON terminal applied in the internet bar is that: users often report slow internet speed and disconnection from online games. Many common download tools such as the Thunder and Thunder Kankan in the internet bar adopt the Point to Point (P2P) technology. These download tools are characterized by distributed sharing of resources and parallel transmission, so as to occupy a large amount of bandwidth. Therefore, if such tools as Thunder (a common download software in China) are applied in an environment of limited bandwidth, particularly in case of small network bandwidth, the packets of other services will be discarded or delayed in sending, thereby seriously affecting the normal use of other services.

In other multi-user network environments similar to the internet bar, such as factory or internet enterprise, the problems above may also occur.

US 2006/013247 A1), US 2006/268719 A1) and EP 1 833 207 A2) provide related technical solutions; however, the above mentioned problem still remains unsolved.

<u>Summary of the Invention</u>

The main objective of the disclosure is to provide a method and an apparatus for sending a packet, so as to at least solve the problem that when some users download a service by the P2P in a multi-user network environment, other users cannot use the internet normally due to high delay or even large amount of packet loss.

In one aspect, the disclosure provides a method for sending a packet, comprising: when a speed of sending the packet by an Optical Network Unit (ONU) exceeds a traffic speed limit of the ONU, caching the packet in a buffer of the ONU and evenly sending the packet according to the traffic speed limit, wherein the traffic speed limit is determined by performing traffic shaping on the ONU, and a value of the buffer of the ONU is determined according to a bandwidth of a network where the ONU is located.

Preferably, determining the traffic speed limit by performing traffic shaping on the ONU and determining the value of the buffer of the ONU according to the bandwidth of the network where the ONU is located comprises: locally setting the traffic speed limit and the value of the buffer of the ONU by the ONU, to determine the traffic speed limit and the value of the buffer of the ONU; or, performing remote control by an Optical Line Terminal (OLT) connected with the ONU to configure the traffic speed limit and the value of the buffer of the ONU.

Preferably, determining the value of the buffer of the ONU according to the bandwidth of the network where the ONU is located comprises: *the value of the buffer = m\*maximum downlink bandwidth/1000 + n*, wherein m is a radix determined according to the downlink bandwidth of a terminal, n is a bandwidth threshold, and a unit of the maximum downlink bandwidth and n is bit per second (bps).

Preferably, when the downlink bandwidth of the network is less than 10M, m is 20 and *n* is 5000; and when the downlink bandwidth of the network is not less than 10M, m is 15 and *n* is 55000.

Preferably, the traffic speed limit of the ONU is 500 bit/s, and the value of the buffer is 512k.

Preferably, evenly sending the packet according to the traffic speed limit comprises: adopting a token bucket algorithm to control the evenly sending of the packet; if there is a token in a token bucket, allowing to send the packet; and if there is no token in the token bucket, not allowing to send the packet.

Preferably, adopting the token bucket algorithm to control the evenly sending of the packet comprises: adding one token into the token bucket every 1/r second, wherein r is a value of the traffic speed limit, and one token represents one byte; and if the token bucket is full when the token reaches the token bucket, discarding the token; if there are at least n tokens in the token bucket when the packet of n bytes reaches the ONU, deleting n tokens from the token bucket, and sending the packet of n bytes by using the deleted n tokens; and if there are less than n tokens in the token bucket when the packet of n bytes reaches the ONU, confirming that the packet of n bytes exceeds traffic limit and discarding the packet of n bytes; or, placing the packet of n bytes in the buffer and sending the packet of n bytes till there are n tokens in the token bucket; or, identifying the packet of n bytes, sending the identified packet of n bytes by using the tokens in the token bucket, and discarding the identified packet of n bytes when the network is overloaded; wherein n is a positive integer.

In another aspect, the disclosure provides an apparatus for sending a packet, comprising: a determination module, configured to determine a traffic speed limit of an Optical Network Unit (ONU) by performing traffic shaping on the ONU, and determine a value of a buffer of the ONU according to a bandwidth of a network where the ONU is located; and

a caching module, configured to when a speed of sending the packet by the ONU exceeds the traffic speed limit of the ONU, cache the packet in the buffer of the ONU and evenly send the packet according to the traffic speed limit.

Preferably, the determination module comprises: a first determining sub-module, configured to locally set the traffic speed limit and the value of the buffer of the ONU by the ONU, and a second determining sub-module, configured to adopt an Optical Line Terminal (OLT) connected with the ONU to perform remote control to configure the traffic speed limit and the value of the buffer of the ONU.

Preferably, the determination module determines the value of the buffer according to a formula of: *the value of the buffer = m\*maximum downlink bandwidth/1000 + n*, wherein m is a radix determined according to a downlink bandwidth of a terminal, n is a bandwidth threshold, and a unit of the downlink bandwidth and n is bit per second (bps).

In the disclosure, when the speed of sending a packet by the ONU exceeds the traffic speed limit of the ONU, the packet is cached in the buffer of the ONU and evenly sent according to the traffic speed limit, wherein the traffic speed limit is determined by performing traffic shaping on the ONU and the value of the buffer of the ONU is determined according to the bandwidth of the network where the ONU is located. This solution solves the problem in the conventional art that when some users use the P2P service to download in a multi-user network environment, other users cannot use the internet normally due to high delay or even large amount of packet loss. In the embodiments of the disclosure, the traffic speed limit is determined by performing traffic shaping on the ONU and a buffer is set, so as to reduce the delay of the PING packet. Thus, this solution can achieve the effect of reducing the packet loss rate and response time of the PING packet.

## Brief Description of the Drawings

The drawings described herein are to provide a further understanding of the disclosure and constitute one part of this application. The schematic embodiments of the disclosure and description thereof are used for explaining the disclosure and not for improperly limiting the disclosure. In the drawings:

Fig. 1 is a diagram showing the structure of a PON system provided by the related arts;
Fig. 2 is a diagram showing the specific environment for networking by taking a PON terminal as a network access device provided by the related arts;

Fig. 3 is a flowchart of a method for sending a packet according to an embodiment of the disclosure;

Fig. 4 is a basic process of a token bucket algorithm according to an embodiment of the disclosure;

Fig. 5 is a diagram showing the relationship between a traffic fluctuation curve and the value of a buffer according to an embodiment of the disclosure;

Fig. 6 is a diagram of a traffic control mechanism of the Transmission Control Protocol (TCP) and User Datagram Protocol (UDP) according to an embodiment of the disclosure;

Fig. 7 is a diagram showing the packet capture of an uplink of an ONU according to an embodiment of the disclosure;

Fig. 8 is a diagram showing the packet capture of a user port of an ONU according to an embodiment of the disclosure;

Fig. 9 is a flowchart of a speed limit method according to an embodiment of the disclosure;

Fig. 10 is a diagram showing the structure of an apparatus for sending a packet according to an embodiment of the disclosure;

Fig. 11 is a diagram showing the structure of a determination module according to an embodiment of the disclosure; and

Fig. 12 is a diagram showing the structure of a caching module according to an embodiment of the disclosure.

## Detailed Description of the Embodiments

The disclosure is described in detail hereinafter with reference to the drawings and in conjunction with the embodiments. It should be noted that the embodiments of the application and features therein can be combined with each other, if there is no conflict.

In the conventional art, when the download tools, such as Thunder and Thunder Kankan, are used in case of limited bandwidth in the multi-user network environment, a lot of bandwidth is occupied. Then, the packets of other services will be discarded or delayed in sending so as to largely affect the normal use of such services. To solve the above problem, the embodiment of the disclosure provides a method for sending a packet. The processing flow of the method is as shown in Fig. 3, comprising the following steps.

Step 301: the traffic speed limit is determined by performing traffic shaping on the ONU; and the value of the buffer of the ONU is determined according to the bandwidth of the network where the ONU is located.

Step 302: when the speed of sending a packet by the ONU exceeds the traffic speed limit of the ONU, the packet is cached in the buffer of the ONU.

Step 303: the packet is evenly sent according to the traffic speed limit.

During the implementation of the flow shown in Fig. 3, the value of the buffer of the ONU is determined according to the bandwidth of the network where the ONU is located. Generally, the buffer is determined to be larger than the indicated buffer according to the bandwidth to increase the amount of allocable buffer of the ONU. In this case, if other users use such download tools as Thunder in the network, a simulated internet packet PING packet is placed in the buffer so as to reduce the packet loss rate. Meanwhile, the delay of the PING packet will be correspondingly increased. In the embodiment, the traffic speed limit is determined by performing traffic shaping on the ONU to shorten the delay of the PING packet, thereby achieving the effect of reducing the packet loss rate and response time of the PING packet.

In one embodiment, preferably, a token bucket algorithm may be selected to control the evenly sending of the packet. Specifically, if there is a token in the token bucket, the packet is allowed to be sent. If there is no token in the token bucket, the packet is not allowed to be sent. During implementation, other algorithms may also be selected, such as the bearing balancing algorithm, and the dynamic traffic limiting algorithm. It only needs to adopt an algorithm which can control the traffic of sending the packet. Which algorithm is specifically adopted is determined according to the actual condition.

When the token bucket algorithm is adopted, the token bucket generally has several parameters: an update rate (or Committed Information Rate, CIR) of token bucket, which only affects the overall download speed but rarely affect the result of PING, and a total size (or Committed Burst Size, CBS) of token bucket, which only affect the initial speed rather than the result of PING.

The control mechanism of the token bucket is that: when the traffic can be sent is determined by whether there is a token in the token bucket. Each token in the token bucket represents a byte. If there is a token, the traffic is allowed to be sent. If there is no token in the token bucket, the traffic is not allowed to be sent. Therefore, if a burst threshold is rationally configured and there are enough tokens in the token bucket, the traffic can be sent at a peak rate.

The basic process of the token bucket algorithm adopted in the embodiment of the disclosure is that: a token is added in the token bucket every $1/r$ second, wherein r is the value of the traffic speed limit, and one token represents one byte; and if the token bucket is full when a token reaches, the token is discarded;

when a packet of n bytes reaches the ONU, if there are at least n tokens in the token bucket, n tokens are deleted from the token bucket and the packet of n bytes is sent by using the deleted n tokens; and

if there are less than n tokens in the token bucket, the packet of n bytes is confirmed to exceed the traffic limit and is discarded; or, the packet of n bytes is placed in the buffer and is sent till there are n tokens in the token bucket; or, the packet of n bytes is identified and is sent by using the tokens in the token bucket, and the identified packet is discarded when the network is overloaded; wherein n is a positive integer.

In the embodiment, a buffer (including an uplink buffer and a downlink buffer) is configured for the ONU. This solution solves the problem of inadequate forwarding capacity of the ONU or PON terminal and ensures the continuity of the packet, i.e., losing as few packets as possible. However, only when the buffer is full, can the interrupt be triggered to send the packet stored in the buffer. Thus, in implementation, if the buffer is overlarge, it will greatly increase the delay. The delay is very critical to such software as online game, and the game will be lagged or even offline when the delay reaches 1000ms, which is unacceptable by users.

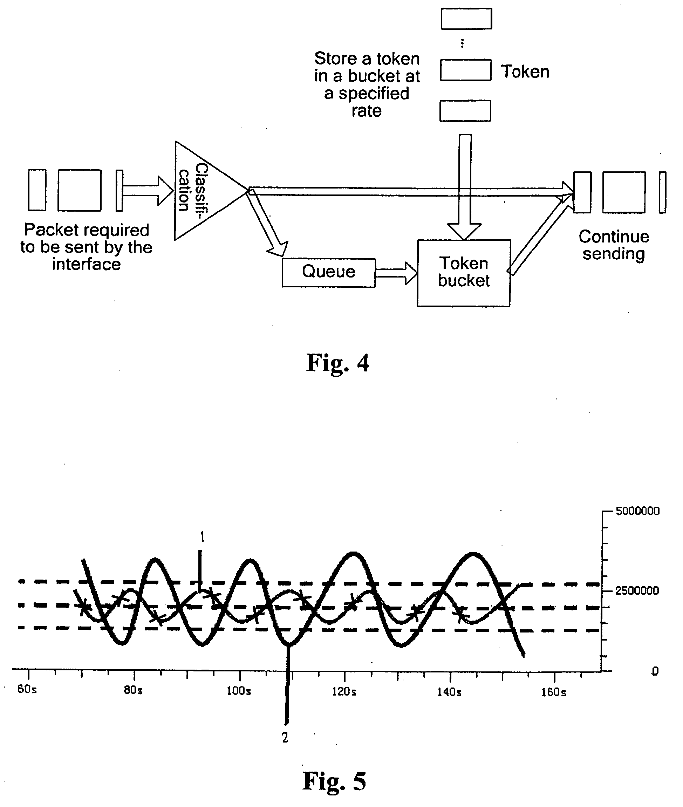

To further illustrate the token bucket algorithm in the embodiment, description is given below in conjunction with the drawings. Specifically, as shown in Fig. 4, it can be seen that tokens are stored in the bucket at a specified rate. The packet to be sent is classified. When there are enough tokens in the token bucket, the packet is directly sent out. When there are not enough token in the token bucket, the packet is placed in the queue and not sent until there are enough tokens in the token bucket.

In one embodiment, preferably, the value of the buffer of the ONU is determined according to the bandwidth of the network where the ONU is located by the following formula:

$$the\ value\ of\ the\ buffer\ =\ m{*}maximum\ downlink\ bandwidth/1000\ +\ n,$$

wherein m is a radix determined according to the downlink bandwidth of the terminal, n is a bandwidth threshold, and the unit of the maximum downlink bandwidth and $n$ is bit per second (bps, or bit/s).

In implementation, when the downlink bandwidth of the network is less than 10M, m is preferably 20, and $n$ is preferably 5000. In this case, *the value of the buffer = 20\*maximum downlink bandwidth (bitls)/1000 + 5000.*

When the downlink bandwidth of the network is not less than 10M, m is preferably 15, and $n$ is preferably 55000. In this case, *the value of the buffer = 95\*maximum downlink bandwidth (bit/s)/1000 + 55000.*

The value of the buffer deduced by the formula is related to the speed-limited bandwidth of the network. Referring to the relationship between two traffic fluctuation curves and the value of the buffer in Fig. 5, it can be seen that when the value of the buffer meets the requirement of its network environment, the traffic fluctuation is made to be within the acceptable range of the buffer, such as the traffic fluctuation curve marked as 1. If the value of the buffer does not meet the requirement of its network environment, it is out of the range of the buffer, such as the traffic fluctuation curve marked as 2.

In implementation, the change of the download speed of such tools as Thunder depends on the traffic control mechanism of the Transmission Control Protocol (TCP) and the User Datagram Protocol (UDP).

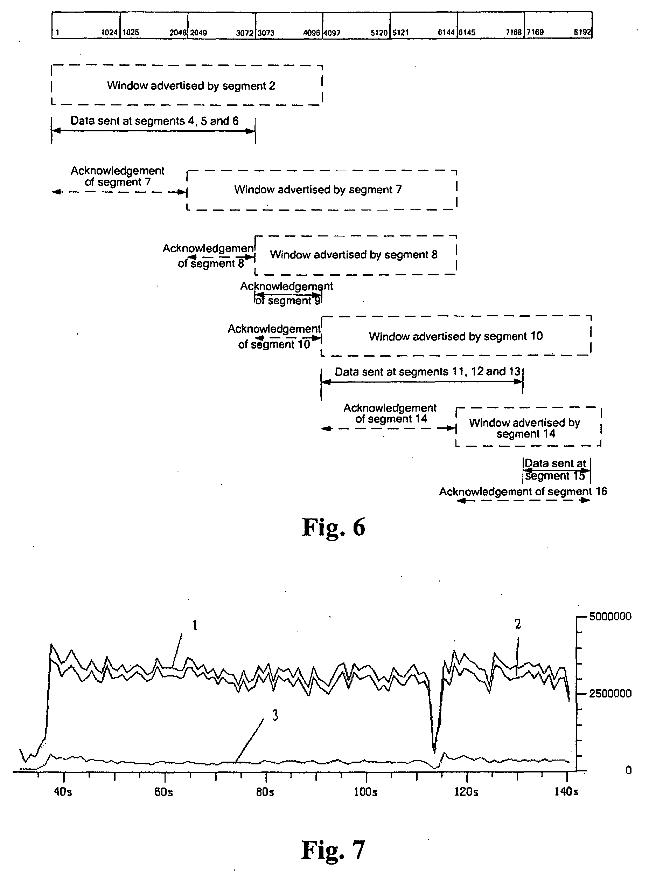

The TCP adopts a sliding window mechanism. And, in the UDP the rate is controlled by the application layer. The application layer traffic control mechanism dynamically controls the sending rate according to confirmation (the three-way handshake protocol is also a traffic control mechanism), as shown in Fig. 6.

Under the condition of limited rate of a port, the protocol regulates the sliding window, i.e. the sending rate, according to the actual packet loss behavior.

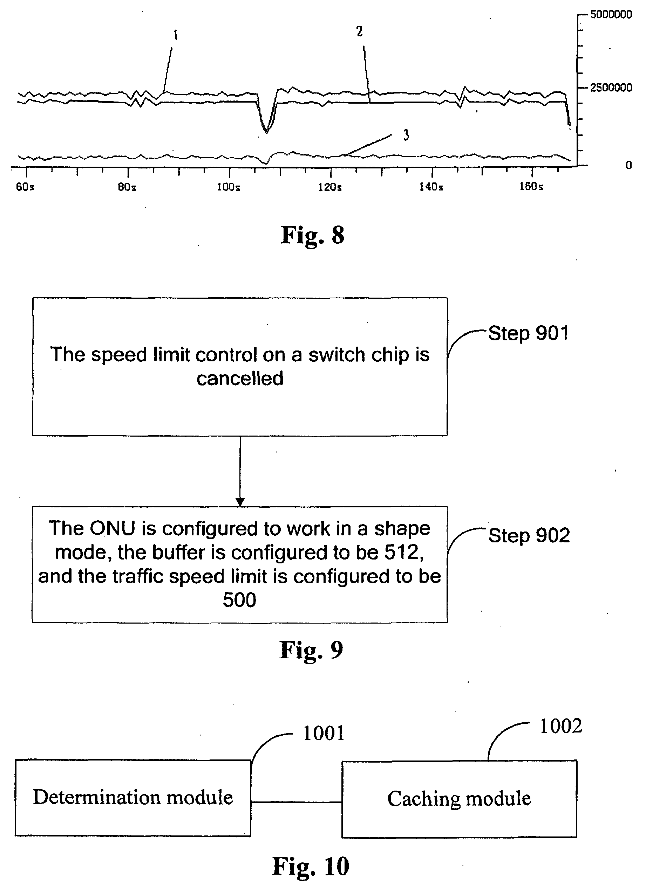

In the above, the packet loss behavior is determined by a buffer depth and a packet loss policy. If the actual packet loss behavior of the PON terminal cannot make the sending end effectively reduce the packet loss rate, the packet loss rate of all the traffic (including the online traffic, represented by the PING packet) is: *packet loss rate = (1 - port limit rate) sending rate\*100%.* Fig. 7 shows the packet capture of an uplink port of an ONU, and Fig. 8 shows the packet capture of a user port of an ONU. In Fig. 7 and Fig. 8, the curve of the overall uplink and downlink rate is marked as 1, the curve of the downlink rate is marked as 2, and the curve of the uplink rate is marked as 3. Referring to the data in Fig. 7 and Fig. 8, it can be seen that if the sending end does not use the buffer to reduce the sending rate, when the average sending rate is 3M and the traffic speed limit is 2M, the packet loss rate of all the traffic is very high, about 30% to 40%. This causes the loss of a large number of packets and affects the online experience.

In implementation, a preferred speed limit method is as shown in Fig. 9, comprising the following steps.

Step 901: the speed limit control on a switch chip is cancelled.

Step 902: the ONU is configured to work in a shape mode, the buffer is configured to be 512, and the traffic speed limit is configured to be 500.

In an embodiment, generally the ONU can only be locally configured. With the rapid development of the PON project, locally configuring the ONU one by one is not only tedious but also unpractical. This problem can be solved by remotely controlling the ONU on the OLT. The commands on the OLT include:

(1) Allocating, on the OLT, the bandwidth for a registered ONU: the registered ONU is selected, and is allocated the bandwidth, wherein both the maximum uplink value and the maximum downlink value are 20480;

(2) Disabling, on the OLT, the speed limit function of the switch chip on the registered ONU: the registered ONU is selected, and the eth_0/1 uplink interface and the eth_0/1 downlink interface are found on the switch chip, and the two interfaces are set to be disabled;

(3) Enabling, on the OLT, the shape function of the PON Media Access Control (MAC) chip on the registered ONU and configuring, on the OLT, the size of the buffer: the shape function of the registered ONU is enabled, the maximum value of the buffer is set to be 8000, and the buffer is set to be 5000 according to the instruction of a user; and

(4) Configuring, on the OLT, the traffic under the shape function of the PON MAC chip on the registered ONU: this traffic is set to be from 800,000 to 6,000,000 in the embodiment.

In order to solve the above technical problem, the embodiment of the disclosure further provides an apparatus for sending a packet. The structure of the apparatus for sending a packet is as shown in Fig. 10, comprising:

a determination module 1001, configured to determine the traffic speed limit of the ONU by performing traffic shaping on the ONU, and determine the value of the buffer of the ONU according to the bandwidth of the network where the ONU is located; and

a caching module 1002, configured to buffer the packet in the buffer of the ONU and evenly send the packet according to the traffic speed limit when the speed of sending the packet by the ONU exceeds the traffic speed limit of the ONU.

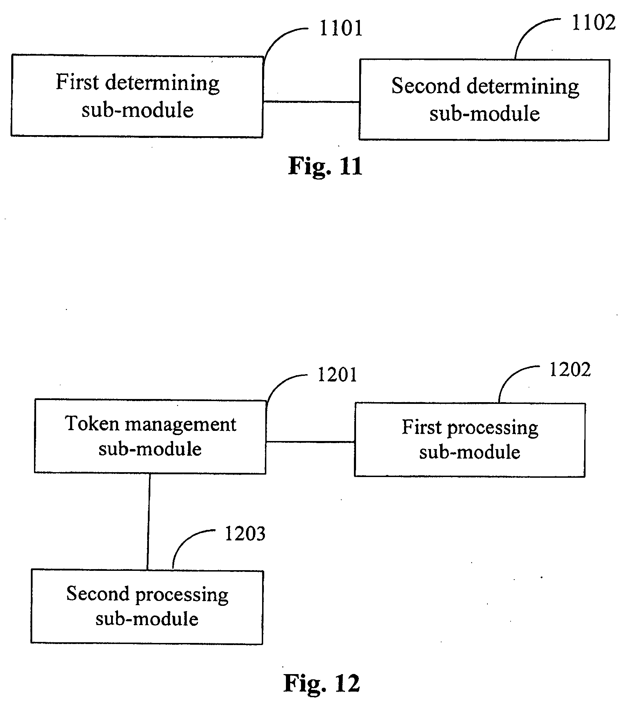

In an embodiment, as shown in Fig. 11, the determination module 1001 can comprise:

a first determining sub-module 1101, configured to locally set the traffic speed limit and the value of the buffer of the ONU by the ONU, and

a second determining sub-module 1102, configured to adopt an OLT connected with the ONU to perform remote control to configure the traffic speed limit and the value of the buffer of the ONU.

In an embodiment, the caching module 1002 can be configured to adopt the token bucket algorithm to control the evenly sending of the packet, wherein if there is a token in the token bucket, the packet is allowed to be sent, and if there is no token in the token bucket, the packet is not allowed to be sent.

In an embodiment, as shown in Fig. 12, the caching module 1002 can comprise:

a token management sub-module 1201, configured to add one token in the token bucket every $1/r$ second wherein $r$ is the value of the traffic speed limit and one token represents one byte, and discard the token if the token bucket is full when the token reaches;

a first processing sub-module 1202, configured to delete $n$ tokens from the token bucket and send a packet of $n$ bytes by using the deleted $n$ tokens if there are at least $n$ tokens in the token bucket when the packet of $n$ bytes reaches the ONU; and

a second processing sub-module 1203, configured to if there are less than $n$ tokens in the token bucket when the packet of $n$ bytes reaches the ONU, confirm that the packet of $n$ bytes exceeds the traffic limit and discard the packet of $n$ bytes; or, place the packet of $n$ bytes in the buffer and send the packet of $n$ bytes till there are $n$ tokens in the token bucket; or, identify the packet of $n$ bytes and send the identified packet of $n$ bytes by using the tokens in the token bucket, and discard the identified packet of $n$ bytes when the network is overloaded; wherein $n$ is a positive integer.

In an embodiment, the determination module 1001 determines the value of the buffer according to the following formula:

the value of the buffer = m*maximum downlink bandwidth/1000 + n, wherein m is a radix determined according to the downlink bandwidth of the terminal, n is a bandwidth threshold, and the unit of the downlink bandwidth and n is bps.

Preferably, in an embodiment, when the downlink bandwidth of the network is less than 10M, the value of the buffer = 20*maximum downlink bandwidth (bit/s)/1000 + 5000. When the downlink bandwidth of the network is not less than 10M, the value of the buffer = 15*maximum downlink bandwidth (bit/s)/1000 + 55000.

In the disclosure, the packet is cached in the buffer of the ONU and evenly sent according to the traffic speed limit when the speed of sending the packet by the ONU exceeds the traffic speed limit of the ONU. The traffic speed limit is determined by performing traffic shaping on the ONU and the value of the buffer of the ONU is determined according to the bandwidth of the network where the ONU is located. Therefore, this solution solves the problem in the conventional art that when some users download a service by the P2P in a multi-user network environment, other users cannot use the internet normally due to high delay or even a large amount of packet loss. In the embodiments of the disclosure, the traffic speed limit is determined by performing traffic shaping on the ONU and a buffer is set. This solution reduces the delay of the PING packet and achieves the effect of reducing the packet loss rate and response time of the PING packet.

Obviously, those skilled in the art shall understand that respective modules or steps of the disclosure may be implemented by general computing apparatuses and centralized in a single computing apparatus or allocated in a network consisting of multiple computing apparatuses. Optionally, the modules or steps may be implemented by program codes executable by the computing apparatus, so that they may be stored in a storage apparatus and executed by the computing apparatus; in some cases, the shown or described steps may be executed in a different order, or the modules or steps are respectively made into integrated circuit modules or a single integrated circuit module. By doing so, the disclosure is not limited to any specific combination of hardware and software.

**Claims**

1.  A method for sending a packet, **characterized by** comprising:

    when a speed of sending the packet by an Optical Network Unit, ONU, exceeds a traffic speed limit of the ONU, caching the packet in a buffer of the ONU (Step 302) and evenly sending the packet according to the traffic speed limit (Step 303),
    wherein the traffic speed limit is determined by performing traffic shaping on the ONU, and a value of the buffer of the ONU is determined according to a bandwidth of a network where the ONU is located (Step 301),
    wherein the evenly sending the packet according to the traffic speed limit further comprises: adopting a token bucket algorithm to control the evenly sending of the packet; if there is a token in a token bucket, allowing to send the packet; and if there is no token in the token bucket, not allowing to send the packet.

2.  The method according to claim 1, **characterized in that** determining the traffic speed limit by performing traffic shaping on the ONU and determining the value of the buffer of the ONU according to the bandwidth of the network where the ONU is located comprises:

    locally setting the traffic speed limit and the value of the buffer of the ONU by the ONU, to determine the traffic speed limit and the value of the buffer of the ONU;
    or, performing remote control by an Optical Line Terminal, OLT, connected with the ONU to configure the traffic speed limit and the value of the buffer of the ONU.

3.  The method according to claim 1 or 2, **characterized in that** determining the value of the buffer of the ONU according to the bandwidth of the network where the ONU is located comprises:

    $$\text{the value of the buffer} = m * \text{maximum downlink bandwidth}/1000 + n,$$

    wherein m is a radix determined according to the downlink bandwidth of a terminal, n is a bandwidth threshold, and unit of the maximum downlink bandwidth and n is bit per second, bps.

4.  The method according to claim 3, **characterized in that**:

    when the downlink bandwidth of the network is less than 10M, m is 20 and n is 5000; and
    when the downlink bandwidth of the network is not less than 10M, m is 15 and n is 55000.

5.  The method according to claim 1 or 2, **characterized in that** the traffic speed limit of the ONU is 500 bit/s, and the value of the buffer is 512k.

6.  The method according to claim 1, **characterized in that** adopting the token bucket algorithm to control the evenly sending of the packet comprises:

    adding one token into the token bucket every 1/r second, wherein r is a value of the traffic speed limit, and one token represents one byte; and if the token bucket is full when the token reaches the token bucket, discarding the token;

if there are at least n tokens in the token bucket when the packet of n bytes reaches the ONU, deleting n tokens from the token bucket, and sending the packet of n bytes by using the deleted n tokens; and

if there are less than n tokens in the token bucket when the packet of n bytes reaches the ONU, confirming that the packet of n bytes exceeds traffic limit and discarding the packet of n bytes; or, placing the packet of n bytes in the buffer and sending the packet of n bytes till there are n tokens in the token bucket; or, identifying the packet of n bytes, sending the identified packet of n bytes by using the tokens in the token bucket, and discarding the identified packet of n bytes when the network is overloaded; wherein n is a positive integer.

7. An apparatus for sending a packet, **characterized by** comprising:

a determination module (1001), configured to determine a traffic speed limit of an Optical Network Unit, ONU, by performing traffic shaping on the ONU, and determine a value of a buffer of the ONU according to a bandwidth of a network where the ONU is located; and

a caching module (1002), configured to when a speed of sending the packet by the ONU exceeds the traffic speed limit of the ONU, cache the packet in the buffer of the ONU and evenly send the packet according to the traffic speed limit,

wherein the caching module further configured to adopt a token bucket algorithm to control the evenly sending of the packet; if there is a token in a token bucket, allowing to send the packet; and if there is no token in the token bucket, not allowing to send the packet.

8. The apparatus according to claim 7, **characterized in that** the determination module comprises:

a first determining sub-module (1101), configured to locally set the traffic speed limit and the value of the buffer of the ONU by the ONU, and

a second determining sub-module (1102), configured to adopt an Optical Line Terminal, OLT, connected with the ONU to perform remote control to configure the traffic speed limit and the value of the buffer of the ONU.

9. The apparatus according to claim 7 or 8, **characterized in that** the determination module determines the value of the buffer according to a formula of:

$$\text{the value of the buffer} = m*\text{maximum downlink bandwidth}/1000 + n,$$

wherein m is a radix determined according to a downlink bandwidth of a terminal, n is a bandwidth threshold, and unit of the downlink bandwidth and n is bit per second, bps.

**Patentansprüche**

1. Ein Verfahren zum Senden eines Pakets, **gekennzeichnet dadurch, dass** dasselbe folgende Schritte aufweist:

wenn eine Geschwindigkeit des Sendens des Pakets durch eine optische Netzeinheit, ONU, eine Datenverkehrsgeschwindigkeitsbegrenzung der ONU überschreitet, Cache-Speichern des Pakets in einem Puffer der ONU (Schritt 302) und gleichmäßiges Senden des Pakets gemäß der Datenverkehrsgeschwindigkeitsbegrenzung (Schritt 303),

wobei die Datenverkehrsgeschwindigkeitsbegrenzung durch ein Durchführen einer Datenverkehrsformung an der ONU bestimmt wird und ein Wert des Puffers der ONU gemäß einer Bandbreite eines Netzes, in dem die ONU angeordnet ist, bestimmt wird (Schritt 301),

wobei das gleichmäßige Senden des Pakets gemäß der Datenverkehrsgeschwindigkeitsbegrenzung ferner folgende Schritte aufweist: Übernehmen eines Token-Bucket-Algorithmus, um das gleichmäßige Senden des Pakets zu steuern; Zulassen des Sendens des Pakets, falls ein Token in einem Token-Bucket ist; und Nicht-Zulassen des Sendens des Paket, falls kein Token in dem Token-Bucket ist.

2. Das Verfahren gemäß Anspruch 1, das **dadurch gekennzeichnet ist, dass** ein Bestimmen der Datenverkehrsgeschwindigkeitsbegrenzung durch ein Durchführen einer Datenverkehrsformung an der ONU und ein Bestimmen des Wertes des Puffers der ONU gemäß der Bandbreite des Netzes, in dem die ONU angeordnet ist, folgende Schritte aufweist:

EP 2 608 460 B1

lokales Festlegen der Datenverkehrsgeschwindigkeitsbegrenzung und des Wertes des Puffers der ONU durch die ONU, um die Datenverkehrsgeschwindigkeitsbegrenzung und den Wert des Puffers der ONU zu bestimmen; oder Durchführen einer Fernsteuerung durch ein optisches Leitungsendgerät, OLT, das mit der ONU verbunden ist, um die Datenverkehrsgeschwindigkeitsbegrenzung und den Wert des Puffers der ONU zu konfigurieren.

3. Das Verfahren gemäß Anspruch 1 oder 2, das **dadurch gekennzeichnet ist, dass** ein Bestimmen des Wertes des Puffers der ONU gemäß der Bandbreite des Netzes, in dem die ONU angeordnet ist, Folgendes aufweist:

der Wert des Puffers = m*maximale Abwärtsverbindungsbandbreite/1000 + n, wobei

wobei m eine Radix ist, die gemäß der Abwärtsverbindungsbandbreite eines Endgerätesbestimmt wird, n eine Bandbreitenschwelle ist und Bit pro Sekunde, bps, eine Einheit der maximalen Abwärtsverbindungsbandbreite und von n ist.

4. Das Verfahren gemäß Anspruch 3, das **dadurch gekennzeichnet ist, dass**:

wenn die Abwärtsverbindungsbandbreite des Netzes geringer als 10M ist, m 20 ist und n 5000 ist; und wenn die Abwärtsverbindungsbandbreite des Netzes nicht geringer als 10M ist, m 15 ist und n 55000 ist.

5. Das Verfahren gemäß Anspruch 1 oder 2, das **dadurch gekennzeichnet ist, dass** die Datenverkehrsgeschwindigkeitsbegrenzung der ONU 500 Bit/s ist und der Wert des Puffers 512k ist.

6. Das Verfahren gemäß Anspruch 1, das **dadurch gekennzeichnet ist, dass** ein Übernehmen des Token-Bucket-Algorithmus zum Steuern des gleichmäßigen Sendens des Pakets folgende Schritte aufweist:

Hinzufügen eines Tokens in den Token-Bucket pro 1/r Sekunde, wobei r ein Wert der Datenverkehrsgeschwindigkeitsbegrenzung ist und ein Token einen Byte darstellt; und Verwerfen des Tokens, falls der Token-Bucket voll ist, wenn der Token den Token-Bucket erreicht; falls zumindest n Token in dem Token-Bucket sind, wenn das Paket von n Bytes die ONU erreicht, Löschen von n Token aus dem Token-Bucket und Senden des Pakets von n Bytes durch Verwenden der gelöschten n Token; und falls weniger als n Token in dem Token-Bucket sind, wenn das Paket von n Bytes die ONU erreicht, Bestätigen, dass das Paket von n Bytes eine Datenverkehrsbegrenzung überschreitet und Verwerfen des Pakets von n Bytes; oder Platzieren des Pakets von n Bytes in dem Puffer und Senden des Pakets von n Bytes, bis n Token in dem Token-Bucket sind; oder Identifizieren des Pakets von n Bytes, Senden des identifizierten Pakets von n Bytes durch Verwenden des Tokens in dem Token-Bucket und Verwerfen des identifizierten Pakets von n Bytes, wenn das Netz überlastet ist; wobei n eine positive Ganzzahl ist.

7. Eine Vorrichtung zum Senden eines Pakets, **dadurch gekennzeichnet, dass** dieselbe folgende Merkmale aufweist:

ein Bestimmungsmodul (1001), das dazu konfiguriert ist, eine Datenverkehrsgeschwindigkeitsbegrenzung einer optischen Netzeinheit, ONU, durch ein Durchführen einer Datenverkehrsformung an der ONU zu bestimmen, und einen Wert eines Puffers der ONU gemäß einer Bandbreite eines Netzes, in dem die ONU angeordnet ist, zu bestimmen; und ein Cache-Speichermodul (1002), das dazu konfiguriert ist, das Paket in dem Puffer der ONU zu cachen und das Paket gleichmäßig gemäß der Datenverkehrsgeschwindigkeitsbegrenzung zu senden, wenn eine Geschwindigkeit des Sendens des Pakets durch die ONU die Datenverkehrsgeschwindigkeitsbegrenzung der ONU überschreitet, wobei das Cache-Speichermodul ferner dazu konfiguriert ist, einen Token-Bucket-Algorithmus zu übernehmen, um das gleichmäßige Senden des Pakets zu steuern; zuzulassen, das Paket zu senden, falls ein Token in einem Token-Bucket ist; und nicht zuzulassen, das Paket zu senden, falls kein Token in dem Token-Bucket ist.

8. Die Vorrichtung gemäß Anspruch 7, die **dadurch gekennzeichnet ist, dass** das Bestimmungsmodul folgende Merkmale aufweist:

ein erstes Bestimmungsuntermodul (1101), das dazu konfiguriert ist, die Datenverkehrsgeschwindigkeitsbegrenzung und den Wert des Puffers der ONU durch die ONU lokal festzulegen, und
ein zweites Bestimmungsuntermodul (1102), das dazu konfiguriert ist, ein optisches Leitungsendgerät, OLT, das mit der ONU verbunden ist, zum Durchführen einer Fernsteuerung zu übernehmen, um die Datenverkehrsgeschwindigkeitsbegrenzung und den Wert des Puffers der ONU zu konfigurieren.

**9.** Die Vorrichtung gemäß Anspruch 7 oder 8, die **dadurch gekennzeichnet ist, dass** das Bestimmungsmodul den Wert des Puffers gemäß folgender Formel bestimmt:

der Wert des Puffers = m*maximale Abwärtsverbindungsbandbreite/1000 + n, wobei

n eine Radix ist, die gemäß einer Abwärtsverbindungsbandbreite eines Endgerätes bestimmt wird, n eine Bandbreitenschwelle ist und Bit pro Sekunde, bps, eine Einheit der Abwärtsverbindungsbandbreite und von n ist.

**Revendications**

**1.** Procédé pour envoyer un paquet, **caractérisé par le fait qu'**il comprend le fait de:

lorsqu'une vitesse d'envoi du paquet par une Unité de Réseau Optique, URO, excède une limite de vitesse de trafic de l'URO, mettre en cache le paquet dans une mémoire tampon de l'URO (Etape 302) et envoyer uniformément le paquet en fonction de la limite de vitesse de trafic (Etape 303),
dans lequel la limite de vitesse de trafic est déterminée en effectuant une mise en forme du trafic sur l'URO, et une valeur de la mémoire tampon de l'URO est déterminée en fonction d'une largeur de bande d'un réseau dans lequel est située l'URO (Etape 301),
dans lequel le fait d'envoyer uniformément le paquet en fonction des limites de vitesse de trafic comprend par ailleurs le fait de: adopter un algorithme de seau à jetons pour commander l'envoi uniforme du paquet; s'il y a un jeton dans un seau à jetons, permettre d'envoyer le paquet; et s'il n'y a pas de jeton dans le seau à jetons, ne pas permettre d'envoyer le paquet.

**2.** Procédé selon la revendication 1, **caractérisé par le fait que** le fait de déterminer la limite de vitesse de trafic en effectuant la mise en forme du trafic sur l'URO et le fait de déterminer la valeur de la mémoire tampon de l'URO en fonction de la largeur de bande du réseau dans lequel se situe l'URO comprend le fait de:

régler localement la limite de vitesse de trafic et la valeur de la mémoire tampon de l'URO par l'URO, pour déterminer la limite de vitesse de trafic et la valeur de la mémoire tampon de l'URO;
ou effectuer une commande à distance par un Terminal de Ligne Optique, TLO, relié à l'URO pour configurer la limite de vitesse de trafic et la valeur de la mémoire tampon de l'URO.

**3.** Procédé selon la revendication 1 ou 2, **caractérisé par le fait que** le fait de déterminer la valeur de la mémoire tampon de l'URO en fonction de la largeur de bande du réseau dans lequel se situe L'URE comprend:

la valeur de la mémoire tampon = m*largeur de bande de liaison descendante maximale/1000 + n, où m est une base déterminée en

où m est une base déterminée en fonction de la largeur de bande de liaison descendante d'un terminal, n est un seuil de largeur de bande, et l'unité de la largeur de bande de liaison descendante maximale et n est bits par seconde, bps.

**4.** Procédé selon la revendication 3, **caractérisé par le fait que**:

lorsque la largeur de bande de liaison descendante du réseau est inférieure à 10M, m est 20 et n est 5.000; et lorsque la largeur de bande de liaison descendante du réseau n'est pas inférieure à 10M, m est 15 et n est 55.000.

**5.** Procédé selon la revendication 1 ou 2, **caractérisé par le fait que** la limite de vitesse de trafic de l'URO est de 500 bits/ s, et la valeur de la mémoire tampon est de 512k.

6. Procédé selon la revendication 1, **caractérisé par le fait que** le fait d'adopter l'algorithme de seau à jetons pour commander l'envoi uniforme du paquet comprend le fait de:

ajouter un jeton dans le seau à jetons chaque 1/r seconde, où r est une valeur de la limite de vitesse de trafic, et un jeton représente un octet; et si le seau à jetons est plein lorsque le jeton atteint le seau à jetons, écarter le jeton;

s'il y a au moins n jetons dans le seau à jetons lorsque le paquet de n octets atteint l'URO, supprimer n jetons du seau à jetons, et envoyer le paquet de n octets à l'aide des n jetons supprimés; et

s'il y a moins de n jetons dans le seau à jetons lorsque le paquet de n octets atteint l'URO, confirmer que le paquet de n octets excède la limite de trafic et écarter le paquet de n octets; ou placer le paquet de n octets dans la mémoire tampon et envoyer le paquet de n octets jusqu'à il y ait n jetons dans le seau à jetons; ou identifier le paquet de n octets, envoyer le paquet identifié de n octets à l'aide des jetons dans le seau à jetons, et écarter le paquet de n octets identifié lorsque le réseau est surchargé; où n est un nombre entier positif.

7. Dispositif pour envoyer un paquet, **caractérisé par le fait qu'**il comprend:

un module de détermination (1001) configuré pour déterminer une limite de vitesse de trafic d'une Unité de Réseau Optique, URO, en effectuant une mise en forme de trafic sur l'URO, et déterminer une valeur d'une mémoire tampon de l'URO en fonction d'une largeur de bande d'un réseau dans lequel se situe l'URO; et

un module de mise en cache (1002) configuré pour mettre en cache, lorsqu'une vitesse d'envoi du paquet par l'URO excède la limite de vitesse de trafic de l'URO, le paquet dans la mémoire tampon de l'URO et envoyer uniformément le paquet en fonction de la limite de vitesse de trafic,

dans lequel le module de mise en cache est par ailleurs configuré pour adopter un algorithme de seau à jetons pour commander l'envoi uniforme du paquet; s'il y a un jeton dans un seau à jetons, permettre d'envoyer le paquet; et s'il n'y a pas de jeton dans le seau à jetons, ne pas permettre d'envoyer le paquet.

8. Dispositif selon la revendication 7, **caractérisé par le fait que** le module de détermination comprend:

un premier sous-module de détermination (1101) configuré pour régler localement la limite de vitesse de trafic et la valeur de la mémoire tampon de l'URO par l'URO, et

un deuxième sous-module de détermination (1102) configuré pour adopter un Terminal de Ligne Optique, TLO, relié à l'URO pour effectuer une commande à distance pour configurer la limite de vitesse de trafic et la valeur de la mémoire tampon de l'URO.

9. Dispositif selon la revendication 7 ou 8, **caractérisé par le fait que** le module de détermination détermine la valeur de la mémoire tampon en fonction d'une formule de:

$$\text{la valeur de la mémoire tampon} = m*\text{largeur de bande de liaison descendante maximale}/1000 + n, \text{ où } m \text{ est une base déterminée en}$$

où m est une base déterminée en fonction de la largeur de bande de liaison descendante d'un terminal, n est un seuil de largeur de bande, et l'unité de la largeur de bande de liaison descendante maximale et n est bits par seconde, bps.

**Fig. 1**

**Fig. 2**

The traffic speed limit is determined by performing traffic shaping on the ONU; and the value of the buffer of the ONU is determined according to the bandwidth of the network where the ONU is located — Step 301

When the speed of sending a packet by the ONU exceeds the traffic speed limit of the ONU, the packet is cached in the buffer of the ONU — Step 302

The packet is evenly sent according to the traffic speed limit — Step 303

**Fig. 3**

Store a token
in a bucket at
a specified
rate

Token

Classifi-
cation

Packet required
to be sent by the
interface

Queue

Token
bucket

Continue
sending

## Fig. 4

5000000

2500000

0

60s          80s          100s          120s          140s          160s

## Fig. 5

| 1 | 1024 | 1025 | 2048 | 2049 | 3072 | 3073 | 4096 | 4097 | 5120 | 5121 | 6144 | 6145 | 7168 | 7169 | 8192 |

Window advertised by segment 2

Data sent at segments 4, 5 and 6

Acknowledgement of segment 7

Window advertised by segment 7

Acknowledgement of segment 8

Window advertised by segment 8

Acknowledgement of segment 9

Acknowledgement of segment 10

Window advertised by segment 10

Data sent at segments 11, 12 and 13

Acknowledgement of segment 14

Window advertised by segment 14

Data sent at segment 15

Acknowledgement of segment 16

## Fig. 6

## Fig. 7

**Fig. 8**

The speed limit control on a switch chip is cancelled — Step 901

The ONU is configured to work in a shape mode, the buffer is configured to be 512, and the traffic speed limit is configured to be 500 — Step 902

**Fig. 9**

— 1001 — 1002

| Determination module | Caching module |

**Fig. 10**

1101

1102

First determining
sub-module

Second determining
sub-module

**Fig. 11**

1201

1202

Token management
sub-module

First processing
sub-module

1203

Second processing
sub-module

**Fig. 12**

**EP 2 608 460 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006013247 A1
- US 2006268719 A1
- EP 1833207 A2